# EUROPEAN PATENT APPLICATION

(11) **EP 4 831 119 A1**
(43) Date of publication of application: **28.10.2026**
(21) Application number: 24893572.8
(22) Date of filing: 22.11.2024
(51) Int. Cl.: C01B 25/45

(54) **LITHIUM IRON PHOSPHATE COMPOSITE PRECURSOR AND PREPARATION METHOD THEREFOR**

(30) Priority: 24.11.2023 CN 202311586655
(71) Applicant: Hunan Langsai Science and Technology Co., Ltd., Yueyang, Hunan 414615 (CN)
(72) Inventor: LIU, Huiji, Yueyang, Hunan 414615 (CN)
(74) Representative: EIP
(86) International application number: PCT/CN2024/133810
(87) International publication number: WO 2025/108418

(57) **Abstract**

The present invention relates to a lithium iron phosphate composite precursor, which comprises an Li₃Fe₂(PO₄)₃ component and an Fe₂O₃ component, wherein the molar ratio of the main elements of the precursor satisfies the equation: Li:Fe:P = (0.95-1.05): (0.95-1): 1. The present invention further relates to a preparation method for the lithium iron phosphate composite precursor. The preparation method comprises the following steps: (1) solution preparation, involving: preparing an aqueous raw material solution having an Fe content of 60-210 g/L according to the molar ratio of Li:Fe:P=(0.95-1.05):( 0.95-1): 1; and (2) spray pyrolysis, involving: subjecting the aqueous raw material solution to spray pyrolysis in an aerobic environment at 400-800°C, so as to obtain the lithium iron phosphate composite precursor.

## Description

The present application claims priority to Chinese Patent Application No. 202311586655.7, filed with the China National Intellectual Property Administration on November 24, 2023, the entire content of which is incorporated herein by reference as part of the present application.

### FIELD OF THE INVENTION

The present invention relates to the field of lithium-ion battery positive electrode materials, and specifically, to a lithium iron phosphate composite precursor and a preparation method thereof.

### BACKGROUND OF THE INVENTION

Lithium iron phosphate is an important positive electrode material for lithium-ion batteries, which is typically prepared using iron phosphate as a precursor. However, when preparing a lithium iron phosphate positive electrode material using an iron phosphate precursor, a certain amount of lithium element needs to be added, and due to the high price of lithium materials, this results in the problem of high cost in manufacturing the positive electrode material. If a lithium-containing iron phosphate precursor product is used, the manufacturing cost of the positive electrode material can be reduced, but from the perspective of overall cost, the lithium-containing iron phosphate precursor product also needs to have a cost advantage to be of practical significance.

On the other hand, with the increasing market share and scrappage of lithium iron phosphate power batteries, lithium iron phosphate batteries that entered the market earlier have begun to be gradually scrapped, and the problem of recycling and reusing electrode materials in spent lithium iron phosphate batteries has become increasingly prominent. Therefore, there is a need for an environmentally friendly and cost-effective method capable of recycling and reusing the lithium iron phosphate material in spent lithium iron phosphate batteries.

Since spent lithium iron phosphate materials contain lithium, if they can be recycled and utilized to manufacture lithium-containing iron phosphate precursor materials, it will be beneficial to reduce the overall manufacturing cost of lithium-ion battery positive electrode materials, and also beneficial to reduce environmental pollution.

Thus, people have begun to consider using spent lithium iron phosphate batteries to manufacture lithium-containing iron phosphate precursor materials. On one hand, this can realize the cyclic utilization of resources and reduce the overall manufacturing cost of lithium-ion battery positive electrode materials; on the other hand, the performance of the precursor can be improved through improvements in the composition and morphology of the precursor, thereby improving the performance of the positive electrode material and the lithium battery. On a further hand, there is no need to further separate lithium from the recycled raw materials, thereby reducing the recycling cost. However, it is well known that the composition of spent lithium iron phosphate battery powder is relatively complex. In addition to positive electrode powder and negative electrode powder, it often contains impurities such as binder, copper scraps and aluminum scraps generated during the crushing process of current collectors, which also brings corresponding difficulties to recycling.

CN113526482 discloses a method for preparing lithium iron phosphate by recycling spent batteries, which involves pre-treating spent lithium iron phosphate power batteries to obtain pure lithium iron phosphate waste material, then supplementing the proportions of each element, and preparing a lithium iron phosphate product by means of spray pyrolysis. This patent uses a method of soaking with a liquid caustic of a certain concentration to remove aluminum. Although this method can achieve a certain removal effect on aluminum in the lithium iron phosphate powder material, the produced aluminate subsequently needs to be neutralized with an acid solution to prepare aluminum hydroxide, etc., the process is relatively complex and the amount of wastewater is large. Meanwhile, since the spent lithium iron phosphate powder generally contains a certain degree of carbon powder, which adsorbs aluminum in the solution, resulting in a low removal rate of aluminum impurities by this method, and it also cannot remove impurities such as titanium and copper, resulting in poor performance of the finally prepared lithium iron phosphate. The initial discharge specific capacity of the lithium iron phosphate product prepared in Example 1 thereof is only about 131 mAh/g.

CN116216684A discloses a method for recovering and separating a lithium iron phosphate material from a lithium iron phosphate battery, comprising: leaching the crushed positive and negative electrode plate powder using sulfuric acid; adding iron powder to remove copper; using a sodium sulfite solution and simultaneously adding an alkali solution to adjust pH to remove aluminum in the form of aluminum phosphate precipitate; adding a H₃PO₄-H₂O₂ mixed solution for reaction, adding a NaOH solution to neutralize the remaining acid to adjust pH, to obtain a mixture of a high-concentration lithium dihydrogen phosphate solution and FePO₄·2H₂O and carbon powder, and then adding a NaOH solution to convert lithium dihydrogen phosphate into lithium phosphate; supplementing a lithium source and an iron source, adding to an ethanol solution, ball-milling and drying; and calcining the powder under the protection of an inert gas to obtain a lithium iron phosphate product. This process is complex, generates a large amount of wastewater, and introduces new impurities such as sulfur and sodium into the final lithium iron phosphate material. In addition, since the lithium source and the iron source are supplemented after obtaining the precursor, the distribution of lithium and iron elements is not sufficiently uniform, which may affect the performance of the final product.

CN115744857A discloses a method for directionally recycling spent lithium iron phosphate batteries to prepare a lithium iron phosphate positive electrode material, comprising: (1) subjecting black mass of the spent lithium iron phosphate battery to alkali leaching and then solid-liquid separation to obtain a solid residue, mixing and soaking the solid residue with an acid and an oxidizing agent, then adding a reducing agent, and then performing solid-liquid separation to obtain a filtrate; (2) adding phosphoric acid to the filtrate and then performing pyrolysis to obtain a dried material, then mixing with a lithium source, a ferrous source and a carbon source to obtain a mixture; (3) adding the mixture to ammonia water for a hydrothermal reaction, then evaporating ammonia to obtain solid particles, and then calcining the solid particles in an inert gas to obtain the lithium iron phosphate positive electrode material. This method requires the use of multiple reagents and requires pyrolysis and hydrothermal reactions, has a complex process, large amounts of wastewater, and high cost.

However, the above prior arts all have their own technical problems, making it difficult to obtain an ideal lithium iron phosphate precursor material, and generally, the iron in the lithium iron phosphate precursor material is ferrous iron, which also causes the existing lithium iron phosphate precursor/lithium iron phosphate material to be subject to many limitations in terms of its performance.

Therefore, there is a need in the art for a lithium iron phosphate composite precursor with excellent performance and a simple, environmentally friendly and low\\\\\\\\\\\\\\\\-cost preparation method thereof.

### SUMMARY OF THE INVENTION

The present invention has been made in view of the above problems existing in the prior art.

In a first aspect, the present invention provides a lithium iron phosphate composite precursor, comprising a Li₃Fe₂(PO₄)₃ component and a Fe₂O₃ component, wherein a molar ratio of main elements of the precursor Li:Fe:P = (0.95-1.05): (0.95-1): 1.

In a second aspect, the present invention provides a preparation method of the lithium iron phosphate composite precursor, comprising the following steps:
(1) solution preparation: preparing a raw material aqueous solution having a Fe element content of 60 g/L to 210 g/L according to a molar ratio of Li:Fe:P=(0.95-1.05):( 0.95-1): 1;
(2) spray pyrolysis: subjecting the raw material aqueous solution to spray pyrolysis under an aerobic environment at 400°C to 800°C to obtain the lithium iron phosphate composite precursor.

The lithium iron phosphate composite precursor may be the precursor of the first aspect of the present invention.

The present invention also relates to a product obtained by the method of the second aspect of the present invention.

In particular, the present invention is realized as follows.

A lithium iron phosphate composite precursor, comprising a Li₃Fe₂(PO₄)₃ component and a Fe₂O₃ component, wherein a molar ratio of main elements of the precursor Li:Fe:P = (0.95-1.05): (0.95-1): 1.

Further, the Li₃Fe₂(PO₄)₃ component belongs to P21/n space group.

Preferably, the Li₃Fe₂(PO₄)₃ component is monoclinic crystal system, and/or the Fe₂O₃ component is hematite phase.

Preferably, lattice parameters of the monoclinic crystal system are a=0.8566 nm, b=1.2053 nm, c=0.8596 nm.

Preferably, primary particles of the lithium iron phosphate composite precursor are a fragment structure formed from hollow spheres, a diameter of the fragments being 50 nm to 500 nm, and a thickness of the fragments being 20 nm to 300 nm.

Further, the primary particles agglomerate to form secondary particles, a diameter of the secondary particles being 200 nm to 50 µm, and a thickness of the secondary particles being 50 nm to 1000 nm.

Preferably, a specific surface area of the lithium iron phosphate composite precursor is 4.0-30.0 m²/g.

Preferably, a tap density of the lithium iron phosphate composite precursor is 0.3-1.5 g/cm³.

Preferably, a sulfur content of the lithium iron phosphate composite precursor is at most 200 ppm.

A preparation method of a lithium iron phosphate composite precursor, comprising the following steps:
(1) solution preparation: preparing a raw material aqueous solution having a Fe element content of 60 g/L to 210 g/L according to a molar ratio of Li:Fe:P=(0.95-1.05):( 0.95-1): 1;
(2) spray pyrolysis: subjecting the raw material aqueous solution to spray pyrolysis under an aerobic environment at 400°C to 800°C to obtain the lithium iron phosphate composite precursor.

Further, step (1) comprises:
1.1) subjecting spent lithium iron phosphate batteries sequentially to discharging, dismantling, and separation to obtain a solid material to be treated containing lithium iron phosphate powder;
1.2) subjecting the obtained solid material to be treated to a leaching treatment using an acid solution to obtain a first treatment liquid containing Li, Fe, and P;
1.3) removing copper ions from the first treatment liquid and reducing ferric ions to ferrous ions to obtain a third treatment liquid;
1.4) in the presence of a reducing agent for ferric ions, adding a pH adjusting agent to the third treatment liquid to adjust a pH value to 2.8-4.0, then separating and removing a formed precipitate to obtain a fourth treatment liquid;
1.5) adjusting a pH value of the fourth treatment liquid to 0.2-0.8, using at least one of a lithium source, an iron source, or a phosphorus source to adjust a molar ratio of Li, Fe, and P in the fourth treatment liquid to Li:Fe:P= (0.95-1.05): (0.95-1): 1, and adjusting the Fe element content to 60 g/L to 210 g/L, to obtain the raw material aqueous solution.

Preferably, the acid used in the leaching treatment in step 1.2) is hydrochloric acid, preferably a concentration of the hydrochloric acid is 20 wt% to 37 wt%.

Further, step 1.3) is carried out as follows:
1.3-1) treating the first treatment liquid with a copper removal agent, and undergoing solid-liquid separation to obtain a second treatment liquid; and
1.3-2) treating the second treatment liquid with a reducing agent to obtain the third treatment liquid.

Preferably, the copper removal agent is iron powder, and the reducing agent is iron powder.

Preferably, wherein the pH adjusting agent in step 1.4) is selected from at least one of lithium carbonate, lithium hydroxide, lithium bicarbonate, lithium oxalate, iron hydroxide, iron powder, lithium phosphate, ferrous phosphate, and ferrous dihydrogen phosphate.

Preferably, wherein the lithium source in step 1.5) is selected from at least one of lithium carbonate, lithium hydroxide, lithium bicarbonate, lithium oxalate, lithium phosphate, lithium monohydrogen phosphate, and lithium dihydrogen phosphate; the iron source is selected from at least one of ferrous hydroxide, iron powder, iron oxide, triiron tetraoxide, iron hydroxide, iron carbonate, and iron phosphate; the phosphorus source is selected from at least one of phosphoric acid, lithium phosphate, and iron phosphate.

Preferably, wherein the adjustment of the pH value in step 1.5) is carried out using the same acid as that used in the leaching process in step 1.2). Alternatively or additionally, it is carried out using an acid solution recovered from the acid solution used in excess in the leaching process in step 1.2).

The present application achieves the following beneficial effects:
(1) The components of the lithium iron phosphate composite precursor according to the first aspect of the present invention or obtained according to the method of the second aspect of the present invention are completely different from the components of precursors used in the prior art for preparing lithium iron phosphate materials. On one hand, the precursor used for preparing lithium iron phosphate in the prior art is usually a mixture of lithium source particles, iron source particles and phosphorus source particles, or a mixture of particles of a precursor formed by some two elements among the lithium source, the iron source and the phosphorus source (for example, iron phosphate) and particles of a precursor of the remaining one element (for example, lithium carbonate), the mixing of which is mixing at the particle level, so that it is difficult to achieve uniform distribution of lithium, iron and phosphorus elements at the molecular level in the lithium iron phosphate product manufactured therefrom; while the elemental composition of the lithium iron phosphate composite precursor in the present invention corresponds to the elemental composition of the final lithium iron phosphate product, so that when manufacturing the lithium iron phosphate material therefrom, there is no need to externally add a lithium source, an iron source and/or a phosphorus source, and it is a (molecular-level) uniform mixture of two independent main components, namely Li₃Fe₂(PO₄)₃ and Fe₂O₃, thereby ensuring the compositional uniformity of the lithium iron phosphate material prepared therefrom, achieving uniform distribution of lithium, iron and phosphorus elements at the molecular level, which is beneficial to achieving better electrochemical performance of the lithium iron phosphate material.
(2) On the other hand, since the precursor has a specific composition and a stable crystal structure, in the subsequent process of synthesizing the lithium iron phosphate positive electrode material therefrom, the crystal structure, orientation and morphology of the lithium iron phosphate can be more easily controlled, and the crystal structure of the obtained positive electrode material is more complete and more stable, which is thereby beneficial to achieving better electrochemical performance of the lithium iron phosphate material.
(3) On a further hand, since the Li₃Fe₂(PO₄)₃ has been uniformly mixed with the Fe₂O₃ component, in the process of preparing the lithium iron phosphate positive electrode material from the precursor of the present invention or the precursor prepared by the method of the present invention, the slurry preparation and feeding steps can be reduced in the slurry preparation step, and the equipment for the batching and slurry preparation process can be simplified, thereby achieving labor and cost savings.

### BRIEF DESCRIPTION OF DRAWINGS

For more clearly illustrating the aspects, embodiments, features, and advantages of the present invention, the present invention will be described below with reference to the accompanying drawings. It should be understood that these drawings are provided only for facilitating the skilled person to more easily understand the present invention, and are not intended to limit the scope of the present invention.
Fig. 1 is a flow chart illustrating an exemplary embodiment of the method according to the present invention.
Figs. 2A-2B are the results illustrating the X-ray diffraction (XRD) analysis of the lithium iron phosphate composite precursor prepared in Preparation Example 1.
Figs. 3A-3B are the results illustrating the scanning electron microscope (SEM) analysis of the precursor for lithium iron phosphate prepared in Preparation Example 1.
Figs. 4(a)-4(d) are the results illustrating the energy dispersive X-ray spectroscopy (EDS) analysis of the precursor for lithium iron phosphate prepared in Preparation Example 1, wherein (a) shows the overall morphology of the precursor, (b) shows the distribution of O element, (c) shows the distribution of P element, and (d) shows the distribution of Fe element.

### DETAILED DESCRIPTION

In order to make the inventive purpose, technical solutions and beneficial technical effects of the present application clearer, the present application will be described in detail below. It should be noted that the various aspects, features, embodiments, and advantages thereof described in the present application can be compatible and/or can be combined together.

Unless otherwise specified, the meanings of the scientific and technical terms in this specification are the same as those generally understood by the skilled person in the art.

In the present application, unless otherwise stated, the term "substantially" means at least 90%, such as at least 95%, such as at least 98%, such as at least 99%, such as at least 99.5%, such as at least 99.8%, such as at least 99.9% of the stated value or object.

In the present application, unless otherwise specified, the term "main(ly)" means at least 50%, such as at least 55%, such as at least 60%, such as at least 65%, such as at least 70%, such as at least 75%, such as at least 80%, such as at least 90%, such as at least 95%, such as at least 98%, such as at least 99%, such as at least 99.5%, such as at least 99.8%, such as at least 99.9% of the stated value or object.

In the present application, unless otherwise stated, the term "about" means 90%-110%, such as 95%-105% of the stated value, and includes the stated value. In the present application, even if a numerical value is not modified by the term "about", it should be understood that it should also be understood as already modified by "about", that is, the stated numerical value includes the numerical value itself and the above deviation around the numerical value.

In the present application, unless otherwise stated, the process steps are carried out at room temperature (25°C) and atmospheric pressure (1 atm).

The present invention relates to a lithium iron phosphate composite precursor and a preparation method thereof.

The present invention will be specifically described below.

### Lithium Iron Phosphate Composite Precursor

In the first aspect of the present invention, the present invention relates to a lithium iron phosphate composite precursor, comprising a Li₃Fe₂(PO₄)₃ component and a Fe₂O₃ component, wherein a molar ratio of main elements of the precursor Li:Fe:P = (0.95-1.05): (0.95-1): 1.

In the present application, the term "lithium iron phosphate composite precursor" refers to a precursor composite or mixture used for synthesizing a lithium iron phosphate positive electrode material.

In the present application, the term "main elements" means elements other than O element and elements at the impurity (content) level. In other words, besides impurity elements, the lithium iron phosphate composite precursor consists substantially of, or consists of, lithium, iron, phosphorus and oxygen elements.

In an embodiment, in the precursor, the Li₃Fe₂(PO₄)₃ and Fe₂O₃ components exist in the form of a uniform mixture of both. Here, the term "uniform mixture" refers to a mixture uniform at the molecular level, in other words, in the precursor, the distribution of each of lithium, iron, phosphorus and oxygen elements is uniform. In the present application, a mixture obtained by mixing particles with particles is not a "uniform mixture".

In an embodiment, the precursor comprises the Li₃Fe₂(PO₄)₃ component and the Fe₂O₃ component, for example, mainly comprises the Li₃Fe₂(PO₄)₃ component and the Fe₂O₃ component, consists substantially of the Li₃Fe₂(PO₄)₃ component and the Fe₂O₃ component, or consists of the Li₃Fe₂(PO₄)₃ component and the Fe₂O₃ component.

For example, relative to the total weight of the precursor, the sum of the weights of the Li₃Fe₂(PO₄)₃ and Fe₂O₃ components can be at least 50.0, 50.5, 51.0, 51.5, 52.0, 52.5, 53.0, 53.5, 54.0, 54.5, 55.0, 56.0, 56.5, 57.0, 57.5, 58.0, 58.5, 59.0, 59.5, 60.0, 60.5, 61.0, 61.5, 62.0, 62.5, 63.0, 63.5, 64.0, 64.5, 65.0, 66.0, 66.5, 67.0, 67.5, 68.0, 68.5, 69.0, 69.5, 70.0, 70.5, 71.0, 71.5, 72.0, 72.5, 73.0, 73.5, 74.0, 74.5, 75.0, 76.0, 76.5, 77.0, 77.5, 78.0, 78.5, 79.0, 79.5, 80.0, 80.5, 81.0, 81.5, 82.0, 82.5, 83.0, 83.5, 84.0, 84.5, 85.0, 86.0, 86.5, 87.0, 87.5, 88.0, 88.5, 89.0, 89.5, 90.0, 90.5, 91.0, 91.5, 92.0, 92.5, 93.0, 93.5, 94.0, 94.5, 95.0, 96.0, 96.5, 97.0, 97.5, 98.0, 98.5, 99.0, 99.5, 99.8, 99.9, 100% by weight, or a range defined by any two thereof.

In the precursor, the P element exists in the form of phosphate radical.

A molar ratio of Li, Fe, P in the precursor is (0.95-1.05): (0.95-1): 1.

For example, in the precursor, relative to 1 mole of P element, the Li element is 0.95-1.05 moles, such as 0.95, 0.96, 0.97, 0.98, 0.99, 1.00, 1.01, 1.02, 1.03, 1.04, 1.05 moles, or within a range defined by any two thereof.

For example, in the precursor, relative to 1 mole of P element, the iron element is 0.95-1.00 moles, such as 0.95, 0.96, 0.97, 0.98, 0.99, 1.00 moles, or within a range defined by any two thereof.

Since a molar ratio of Li, Fe, P in the precursor of the present invention corresponds to a molar ratio of Li, Fe, P in the final lithium iron phosphate material, in the subsequent process of synthesizing lithium iron phosphate, there is no need to add additional Li, Fe, P source compounds, avoiding the use of raw materials such as lithium carbonate, and eliminating the process and energy required for the decomposition of raw materials such as lithium carbonate, so that compared with the precursors in the prior art, the sintering time for synthesizing lithium iron phosphate can be reduced, and the synthesis cost can be reduced. In addition, since the precursor has a specific composition (Li₃Fe₂(PO₄)₃ component and Fe₂O₃ component), in the subsequent process of synthesizing the lithium iron phosphate positive electrode material therefrom, the crystal structure, orientation and morphology of the lithium iron phosphate can be more easily controlled, and the crystal structure of the obtained positive electrode material is more complete and more stable, which is beneficial to achieving better electrochemical performance of the lithium iron phosphate material. Furthermore, since the Li₃Fe₂(PO₄)₃ component and the Fe₂O₃ component are uniformly mixed (at the molecular level), the compositional uniformity of the lithium iron phosphate material prepared therefrom is ensured, achieving uniform distribution of lithium, iron and phosphorus elements at the molecular level, which is beneficial to achieving better electrochemical performance of the lithium iron phosphate material.

In an embodiment, the Li₃Fe₂(PO₄)₃ component can be mainly, be substantially, or be monoclinic crystal system.

In an embodiment, the Fe₂O₃ component can be mainly, be substantially, or be hematite phase.

In an embodiment, the precursor can comprise the Li₃Fe₂(PO₄)₃ component of monoclinic crystal system and the Fe₂O₃ component of hematite phase, for example, mainly comprises the Li₃Fe₂(PO₄)₃ component of monoclinic crystal system and the Fe₂O₃ component of hematite phase, consists substantially of the Li₃Fe₂(PO₄)₃ component of monoclinic crystal system and the Fe₂O₃ component of hematite phase, or consists of the Li₃Fe₂(PO₄)₃ component of monoclinic crystal system and the Fe₂O₃ component of hematite phase.

For example, relative to the total weight of the precursor, the sum of the weights of the Li₃Fe₂(PO₄)₃ of monoclinic crystal system and the Fe₂O₃ of hematite phase components can be at least 50.0, 50.5, 51.0, 51.5, 52.0, 52.5, 53.0, 53.5, 54.0, 54.5, 55.0, 56.0, 56.5, 57.0, 57.5, 58.0, 58.5, 59.0, 59.5, 60.0, 60.5, 61.0, 61.5, 62.0, 62.5, 63.0, 63.5, 64.0, 64.5, 65.0, 66.0, 66.5, 67.0, 67.5, 68.0, 68.5, 69.0, 69.5, 70.0, 70.5, 71.0, 71.5, 72.0, 72.5, 73.0, 73.5, 74.0, 74.5, 75.0, 76.0, 76.5, 77.0, 77.5, 78.0, 78.5, 79.0, 79.5, 80.0, 80.5, 81.0, 81.5, 82.0, 82.5, 83.0, 83.5, 84.0, 84.5, 85.0, 86.0, 86.5, 87.0, 87.5, 88.0, 88.5, 89.0, 89.5, 90.0, 90.5, 91.0, 91.5, 92.0, 92.5, 93.0, 93.5, 94.0, 94.5, 95.0, 96.0, 96.5, 97.0, 97.5, 98.0, 98.5, 99.0, 99.5, 99.8, 99.9, 100% by weight, or a range defined by any two thereof.

When the precursor has the above specific crystal structures, in the subsequent process of synthesizing the lithium iron phosphate positive electrode material therefrom, the crystal structure, orientation and morphology of the lithium iron phosphate can be more easily and more excellently controlled, and the crystal structure of the obtained positive electrode material is more complete and more stable, which is beneficial to achieving better electrochemical performance of the lithium iron phosphate material.

In an embodiment, lattice parameters of the monoclinic crystal system can be a=0.8566 nm, b=1.2053 nm, c=0.8596 nm.

In an embodiment, the Li₃Fe₂(PO₄)₃ component can belong to P21/n space group.

Besides the Li, Fe, P and O elements, the precursor contains extremely low contents of impurity elements such as Na, K, Ca, Cu, Ni, Cr and Zn. For example, the precursor can satisfy one or more, or all of the following conditions (1)-(10):
(1) the Na element content in the precursor is at most 100 ppm, at most 95 ppm, at most 90 ppm, at most 85 ppm, at most 80 ppm, at most 75 ppm, at most 70 ppm, at most 65 ppm or lower, or a range defined by any two thereof; and/or
(2) the K element content in the precursor is at most 20 ppm, at most 15 ppm, or at most 10 ppm or lower, or a range defined by any two thereof; and/or
(3) the Ca element content in the precursor is at most 100 ppm, at most 95 ppm, or at most 90 ppm, at most 85 ppm, at most 80 ppm, at most 75 ppm, at most 70 ppm, or at most 65 ppm, at most 60 ppm, at most 55 ppm, at most 50 ppm, at most 45 ppm or lower, or a range defined by any two thereof; and/or
(4) the Cu element content in the precursor is at most 10 ppm, at most 8 ppm, at most 6 ppm, at most 5 ppm or lower, or a range defined by any two thereof; and/or
(5) the Ni element content in the precursor is at most 50 ppm, at most 45 ppm, at most 40 ppm, at most 35 ppm, at most 30 ppm, at most 25 ppm, at most 20 ppm, at most 15 ppm, at most 10 ppm or lower, or a range defined by any two thereof; and/or
(6) the Cr element content in the precursor is at most 70 ppm, at most 65 ppm, at most 60 ppm, at most 55 ppm, at most 50 ppm, at most 45 ppm, at most 40 ppm, at most 35 ppm, at most 30 ppm, at most 25 ppm or lower, or a range defined by any two thereof; and/or
(7) the Zn element content in the precursor is at most 50 ppm, at most 45 ppm, at most 40 ppm, at most 35 ppm, at most 30 ppm, at most 25 ppm, at most 20 ppm or lower, or a range defined by any two thereof; and/or
(8) the Mg element content in the precursor is at most 50 ppm, at most 45 ppm, at most 40 ppm, at most 35 ppm, at most 30 ppm, at most 25 ppm, at most 20 ppm, at most 15 ppm or lower, or a range defined by any two thereof; and/or
(9) the Al element content in the precursor is at most 50 ppm, at most 45 ppm, at most 40 ppm, at most 35 ppm, at most 30 ppm, at most 25 ppm, at most 20 ppm or lower, or a range defined by any two thereof; and/or
(10) a sulfur element content in the precursor is at most 200 ppm, such as at most 195, 190, 185, 180, 175, 170, 165, 160, 155, 150, 145, 140, 135, 130, 125, 120, 115, 110, 105, 100, 95, 90, 85, 80, 75, 70, 65, 60, 55, 50, 45, 40, 35, 30, 25 ppm or lower, or a range defined by any two thereof.

When the precursor has the impurity contents defined above, the adverse effects of impurities on the performance of the lithium iron phosphate material prepared therefrom can be significantly reduced, thereby improving the electrochemical performance of the lithium iron phosphate material.

The precursor can be in the form of non-agglomerated primary particles, secondary particles formed by the agglomeration of primary particles, or any combination thereof, wherein the primary particles can be solid spheres, solid sphere fragments, hollow spheres, hollow sphere fragments, or a combination thereof in any proportion, preferably hollow spheres, hollow sphere fragments, or a combination thereof in any proportion, more preferably substantially in the form of hollow sphere fragments.

The particle size of each of the solid spheres and hollow spheres is not particularly limited and can be 1 µm-2000 µm, for example, can be 1 µm, 2 µm, 3 µm, 4 µm, 5 µm, 7 µm, 8 µm, 9 µm, 10 µm, 20 µm, 30 µm, 40 µm, 50 µm, 60 µm, 70 µm, 80 µm, 90 µm, 100 µm, 150 µm, 200 µm, 300 µm, 400 µm, 500 µm, 600 µm, 700 µm, 800 µm, 1000 µm (1 mm), 1200 µm, 1500 µm, 2000 µm, or a range defined by any two thereof. The particle size can be measured by any suitable method known in the art, for example, by a (laser) particle size analyzer, or electron microscope photograph analysis. Unless otherwise specified, the particle size refers to the (volume-average) mean particle size (also referred to as median particle size D₅₀).

The wall thickness of the hollow spheres can be 50-500 nm, for example, can be 50, 60, 70, 80, 90, 100, 150, 200, 250, 300, 350, 400, 450, 500 nm, or a range defined by any two thereof. The wall thickness can be measured by any suitable method known in the art, for example, by electron microscope photograph analysis. Unless otherwise specified, the wall thickness refers to the average wall thickness.

The particle size (primary particle size) of the primary particles can be 100-800 nm, for example, 100, 150, 200, 250, 300, 350, 400, 450, 500, 550, 600, 650, 700, 750, 800 nm, or a range defined by any two thereof. The particle size can be measured by any suitable method known in the art, for example, by electron microscope photograph analysis of the precursor. Unless otherwise specified, this particle size refers to the (volume-average) mean particle size (also referred to as median particle size D₅₀).

The particle size of the secondary particles can be 200 nm-50 µm, for example, can be 200 nm, 250 nm, 300 nm, 350 nm, 400 nm, 450 nm, 500 nm, 550 nm, 600 nm, 650 nm, 700 nm, 750 nm, 800 nm, 900 nm, 1000 nm, 1 µm, 2 µm, 3 µm, 4 µm, 5 µm, 7 µm, 8 µm, 9 µm, 10 µm, 20 µm, 30 µm, 40 µm, 50 µm, or a range defined by any two thereof. The particle size can be measured by any suitable method known in the art, for example, by laser scattering analysis, sieving, or electron microscope photograph analysis of the precursor. Unless otherwise specified, this particle size refers to the (volume-average) mean particle size (also referred to as median particle size D₅₀).

In one embodiment, primary particles of the precursor are hollow sphere fragments (a fragment structure formed from hollow spheres), and a thickness of the fragments is 20-300 nm, for example, can be 20, 30, 40, 50, 60, 70, 80, 90, 100, 110, 120, 130, 140, 150, 160, 170, 180, 190, 200, 210, 220, 230, 240, 250, 260, 270, 280, 290, 300 nm, or a range defined by any two thereof; a diameter of the fragments is 50-500 nm, for example, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500 nm, or a range defined by any two thereof.

In one embodiment, the primary particles agglomerate to form secondary particles, a diameter of the secondary particles being 200 nm to 50 µm, for example, can be 200 nm, 250 nm, 300 nm, 350 nm, 400 nm, 450 nm, 500 nm, 550 nm, 600 nm, 650 nm, 700 nm, 750 nm, 800 nm, 900 nm, 1000 nm, 1 µm, 2 µm, 3 µm, 4 µm, 5 µm, 7 µm, 8 µm, 9 µm, 10 µm, 20 µm, 30 µm, 40 µm, 50 µm, or a range defined by any two thereof; a thickness of the secondary particles being 50-1000 nm, for example, can be 50, 60, 70, 80, 90, 100, 150, 200, 250, 300, 350, 400, 450, 500, 550, 600, 650, 700, 750, 800, 900, 1000 nm, or a range defined by any two thereof.

In the present application, the "diameter" of the particles (primary particles and secondary particles) refers to the maximum dimension in the direction perpendicular (or substantially perpendicular) to the "thickness" direction of the particles. In the present application, "diameter" and "length" have the same meaning and are used interchangeably. The "diameter" and "thickness" can be measured, for example, by electron microscope photograph analysis.

In one embodiment, a specific surface area of the precursor particles is 4.0-30.0 m²/g, for example, can be 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 24.5, 25.0, 25.5, 26.0, 26.5, 27.0, 27.5, 28.0, 28.5, 29.0, 29.5, 30.0 m²/g, or a range defined by any two thereof. The specific surface area can be determined by, for example, the BET method.

In one embodiment, a tap density of the precursor is 0.3-1.5 g/cm³, for example, can be 0.3, 0.4, 0.5, 0.6, 0.7, 0.8, 0.9, 1.0, 1.1, 1.2, 1.3, 1.4, 1.5 g/cm³, or a range defined by any two thereof.

When the precursor has the above-defined dimensions or particle size (primary particle size and/or secondary particle size) and/or BET and/or tap density, it is beneficial to improve the pressed density of the lithium iron phosphate positive electrode material prepared therefrom, thereby obtaining a higher energy density.

### Preparation Method of Lithium Iron Phosphate Composite Precursor

In a second aspect, the present invention relates to a preparation method of the lithium iron phosphate composite precursor, comprising the following steps:
(1) solution preparation: preparing a raw material aqueous solution having a Fe element content of 60 g/L to 210 g/L according to a molar ratio of Li:Fe:P=(0.95-1.05):( 0.95-1): 1;
(2) spray pyrolysis: subjecting the raw material aqueous solution to spray pyrolysis under an aerobic environment at 400°C to 800°C to obtain the lithium iron phosphate composite precursor.

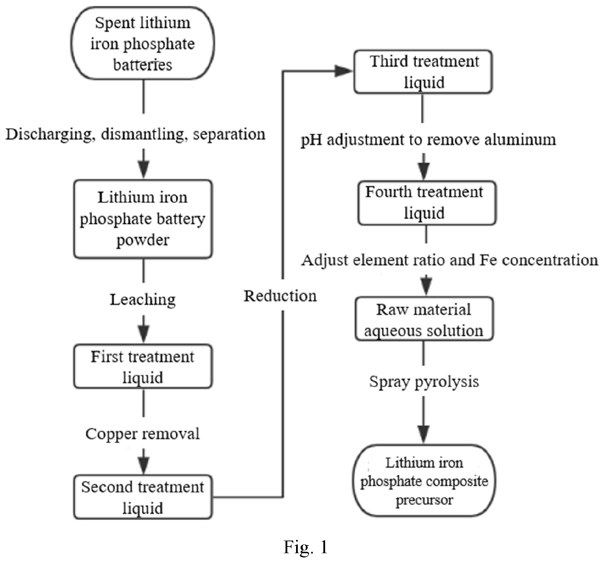

Fig. 1 shows an exemplary embodiment of the method of the present invention. The method is specifically described below with reference to Fig. 1.

### Step (1)

In step (1), solution preparation is carried out, wherein a raw material aqueous solution having a Fe element content of 60 g/L to 210 g/L is prepared according to a molar ratio of Li:Fe:P=(0.95-1.05):( 0.95-1): 1.

In an embodiment, in the raw material aqueous solution, the P element exists in the form of phosphate radical.

The raw material aqueous solution can be prepared by dissolving a lithium source, an iron source and a phosphorus source, optionally in the presence of an acid, in water. The acid can be as described below.

In the prepared raw material aqueous solution, the Li:Fe:P element ratio is (0.95-1.05):(0.95-1): 1. For example, in the prepared raw material aqueous solution, relative to 1 mole of P element, the Li element is 0.95-1.05 moles, such as 0.95, 0.96, 0.97, 0.98, 0.99, 1.00, 1.01, 1.02, 1.03, 1.04, 1.05 moles, or within a range defined by any two thereof. For example, in the prepared raw material aqueous solution, relative to 1 mole of P element, the iron element is 0.95-1.00 moles, such as 0.95, 0.96, 0.97, 0.98, 0.99, 1.00 moles, or within a range defined by any two thereof.

In the prepared raw material aqueous solution, the iron element content can be 60 g/L to 210 g/L, such as 150 g/L to 200 g/L. For example, the iron element content can be 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210 g/L, or within a range defined by any two thereof. By controlling the content of the iron element within the above range, on one hand, the energy consumption during spray sintering can be reduced, and on the other hand, the particle size of the particles obtained by spray sintering can be controlled, which is beneficial to reducing the sintering time for the subsequent synthesis of lithium iron phosphate and reducing the synthesis cost.

The iron element concentration in the solution here can be determined or confirmed by any suitable method known in the art. For example, it can be determined from the amount of each element used and the amount of water. This concentration can also be measured or confirmed by inductively coupled plasma optical emission spectroscopy (ICP).

In one embodiment, the solution preparation step (1) can comprise the following, or can be carried out as follows:
1.1) subjecting spent lithium iron phosphate batteries sequentially to discharging, dismantling, and separation to obtain a solid material to be treated containing lithium iron phosphate powder;
1.2) subjecting the obtained solid material to be treated to a leaching treatment using an acid solution to obtain a first treatment liquid containing Li, Fe, and P;
1.3) removing copper ions from the first treatment liquid and reducing ferric ions to ferrous ions to obtain a third treatment liquid;
1.4) in the presence of a reducing agent for ferric ions, adding a pH adjusting agent to the third treatment liquid to adjust a pH value to 2.8-4.0, then separating and removing a formed precipitate to obtain a fourth treatment liquid;
1.5) adjusting a pH value of the fourth treatment liquid to 0.2-0.8, using at least one of a lithium source, an iron source, or a phosphorus source to adjust a molar ratio of Li, Fe, and P in the fourth treatment liquid to Li:Fe:P= (0.95-1.05): (0.95-1): 1; and adjusting the Fe element content to 60 g/L to 210 g/L, to obtain a fifth treatment liquid as the raw material aqueous solution.

### Step 1.1)

In step 1.1), the spent lithium iron phosphate battery is sequentially subjected to discharging, dismantling, and separation ("discharging, dismantling, separation" in Fig. 1) to obtain a solid material to be treated containing lithium iron phosphate powder ("lithium iron phosphate battery powder" in Fig. 1).

In this step, the spent lithium iron phosphate battery is first discharged. The discharging can be carried out in any manner known in the art. For example, the discharging can be completed using a charge-discharge device. Alternatively, the discharging can also be completed by using a saline water soaking method. The discharging is usually a full discharge. It can be reflected by the battery voltage. For example, when the battery voltage is 2V or less, for example 1-2V, the discharge can be considered complete.

After the discharging is completed, the battery is dismantled and separated to obtain a solid material to be treated containing lithium iron phosphate powder.

The dismantling destroys the battery casing by mechanical means, separates the negative electrode/separator/positive electrode, and then separation is performed to thereby remove the battery casing, separator, negative electrode, electrolyte, etc., thereby obtaining a positive electrode plate. The skilled person can understand that parts of the separator, negative electrode (negative electrode active material, negative electrode current collector (copper)) and other materials may remain in the obtained positive electrode plate material; after dismantling to obtain the positive electrode plate, the positive electrode plate is crushed, and the aluminum foil (positive electrode current collector) is sieved and removed, thereby obtaining a solid material to be treated containing lithium iron phosphate powder through separation.

Crushing can be carried out by any means known in the art, for example using a crusher.

Sieving can be carried out by any means known in the art, for example using sieving, vibratory sieving, for example using a circular vibratory sieve.

Therefore, in a specific embodiment, in step 1.1), the spent lithium iron phosphate battery is discharged, and then dismantled to obtain a positive electrode plate, the positive electrode plate is crushed, and the aluminum foil is sieved and removed to obtain a solid material to be treated containing lithium iron phosphate powder.

### Step 1.2)

In step 1.2), the obtained (in step 1.1)) solid material to be treated is subjected to a leaching treatment using an acid solution ("leaching" in Fig. 1) to obtain a first treatment liquid containing Li, Fe, and P ("first treatment liquid" in Fig. 1).

The acid solution is used to dissolve substances such as lithium iron phosphate, copper oxide, and Al, so that elements such as Li, Fe, P, Cu, and Al enter the solution. The acid solution can be hydrochloric acid, sulfuric acid or nitric acid solution, preferably hydrochloric acid.

When hydrochloric acid is used, based on the mass of HCl and the solid material to be treated used in the leaching treatment, the mass ratio of HCl to the solid material to be treated can be 0.10-0.30:1, preferably 0.13-0.26:1, preferably 0.14-0.20:1. For example, relative to 1 part by mass of the solid material to be treated, the amount of HCl can be 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30 parts by mass, or within a range defined by any two thereof. When the mass ratio is 0.10-0.30:1, sufficient and relatively rapid dissolution of substances such as lithium iron phosphate, copper oxide, and Al can be ensured. Higher mass ratios can also be used. However, from economic and environmental perspectives, this is not preferred.

Preferably, the leaching treatment is carried out under stirring.

The leaching treatment can be carried out for at least 4 hours, for example 6-48 hours or longer. For example, the leaching treatment can be carried out for 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48 hours, or within a range defined by any two thereof. The skilled person can understand that the time of the leaching treatment refers to the time calculated from when the solid material to be treated starts to contact the hydrochloric acid solution.

The leaching treatment can be carried out at a liquid-to-solid mass ratio of 3.0-50.0:1, such as 3.0-35.0. For example, the liquid-to-solid ratio can be 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 12.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, 33.0, 33.5, 34.0, 34.5, 35.0, 35.5, 36.0, 36.5, 37.0, 37.5, 38.0, 38.5, 39.0, 39.5, 40.0, 40.5, 41.0, 41.5, 42.0, 42.5, 43.0, 43.5, 44.0, 44.5, 45.0, 45.5, 46.0, 46.5, 47.0, 47.5, 48.0, 48.5, 49.0, 49.5, 50.0, or within a range defined by any two thereof.

The leaching treatment can be carried out at a suitable temperature, for example, at a temperature of 20-60°C, such as 20, 25, 30, 35, 40, 45, 50, 55, 60°C, or within a temperature range defined by any two thereof.

The leaching treatment can be carried out as follows: (i) mixing the solid material to be treated with the hydrochloric acid solution and stirring.

Alternatively, the leaching treatment can be carried out as follows: (i') mixing the solid material to be treated with water and stirring to prepare a slurry; then (ii') adding the hydrochloric acid solution to the obtained slurry and stirring.

In step (i'), the solid material to be treated can be mixed with water at a liquid-to-solid mass ratio of 2.5-49.5:1, such as 3.0-35.0. The liquid-to-solid mass ratio can be, for example, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 12.0, 22.5, 23.0, 23.5, 24.0, 24.5, 25.0, 25.5, 26.0, 26.5, 27.0, 27.5, 28.0, 28.5, 29.0, 29.5, 30.0, 30.5, 31.0, 31.5, 32.0, 32.5, 33.0, 33.5, 34.0, 34.5, 35.0, 35.5, 36.0, 36.5, 37.0, 37.5, 38.0, 38.5, 39.0, 39.5, 40.0, 40.5, 41.0, 41.5, 42.0, 42.5, 43.0, 43.5, 44.0, 44.5, 45.0, 45.5, 46.0, 46.5, 47.0, 47.5, 48.0, 48.5, 49.0, 49.5, or within a range defined by any two thereof.

In step (i'), the stirring time can be 1-24 h, for example, can be 1, 2, 3, 4, 5, 6, 7, 8, 9, 10, 11, 12, 13, 14, 15, 16, 17, 18, 19, 20, 21, 22, 23, 24 hours, or within a range defined by any two thereof.

In step (ii'), based on the mass of HCl in the added hydrochloric acid solution and the solid material to be treated, the mass ratio of HCl to the solid material to be treated can be 0.10-0.30:1, preferably 0.13-0.26:1, preferably 0.14-0.20:1. For example, relative to 1 part by mass of the solid material to be treated, the amount of HCl can be 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30 parts by mass, or within a range defined by any two thereof. As described above, when the mass ratio is 0.10-0.30:1, sufficient and relatively rapid dissolution of substances such as lithium iron phosphate, copper oxide, and Al can be ensured. Higher mass ratios can also be used. However, from economic and environmental perspectives, this is not preferred.

A concentration of the hydrochloric acid solution added in step (ii') can be 15 wt% to 37 wt%, such as 20 wt% to 37 wt%, for example, can be 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37% by mass, or within a range defined by any two thereof.

Steps (i), (i') and (ii') can each independently be carried out at a suitable temperature, for example, at a temperature of 20-60°C, such as 20, 25, 30, 35, 40, 45, 50, 55, 60°C, or within a temperature range defined by any two thereof.

The mass ratio of the hydrochloric acid solution added in step (ii') to the solid material to be treated can be 0.45-1.50:1, such as 0.60-0.80:1. For example, in step (ii'), relative to 1 part by mass of the solid material to be treated, the mass of the added hydrochloric acid solution can be 0.45, 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or within a range defined by any two thereof.

In step (ii'), the stirring can be carried out for 3-45 h, for example, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48 hours, or within a range defined by any two thereof.

Other acids such as sulfuric acid or nitric acid are also used. When other acids such as sulfuric acid or nitric acid are used, the amount thereof can be the amount obtained by converting the amount described above for HCl under the condition of the same number of H atoms. In other words, the hydrogen ion amount calculated based on the amount of HCl is equally applicable to the case of using other acids such as nitric acid and sulfuric acid, that is, when nitric acid is used, the amount thereof can be the amount of HCl described herein, and when sulfuric acid is used, the amount thereof can be half of the amount of HCl.

By treating the solid material to be treated containing lithium iron phosphate powder with the acid solution, the lithium iron phosphate powder, copper oxide, and aluminum components contained in the solid material to be treated can be dissolved, the Li, Fe, and P elements can be mixed at the molecular level, and it is helpful for the subsequent removal of copper and aluminum elements.

When using an acid such as HCl for the leaching treatment, the conductive agent such as carbon black and the binder such as polyvinylidene fluoride from the battery, for example, the positive electrode, do not dissolve, so that after the leaching treatment, the obtained mixture will contain carbon residue (solid material mainly or substantially formed from carbon black).

Therefore, after the leaching treatment, solid materials are optionally removed from the obtained mixture (not shown in Fig. 1), thereby obtaining the first treatment liquid.

In one embodiment, after the acid leaching treatment, the solid materials (carbon residue) are removed from the obtained mixture (not shown in Fig. 1), thereby obtaining the first treatment liquid.

The first treatment liquid contains Li ions, iron ions, and phosphate ions, and also contains copper ions, aluminum ions, and other impurity ions.

### Step 1.3)

In step 1.3), copper ions are removed from the first treatment liquid and ferric ions are reduced to ferrous ions ("copper removal" and "reduction" in Fig. 1), to obtain a third treatment liquid ("third treatment liquid" in Fig. 1).

This step can be carried out as follows:
1.3-1) treating the first treatment liquid with a copper removal agent (capable of) selectively converting divalent copper ions into a solid precipitate, optionally separating and removing the solid materials, to obtain a second treatment liquid ("second treatment liquid" in Fig. 1); and
1.3-2) treating the second treatment liquid under an inert atmosphere with a reducing agent (capable of) reducing ferric ions to ferrous ions, to obtain a third treatment liquid ("third treatment liquid" in Fig. 1).

The term "selectively" herein means that the copper removal agent can convert divalent copper ions into a solid precipitate without converting, or substantially without converting, the iron ions, lithium ions, or phosphate ions in the solution into a solid precipitate.

In one embodiment, the copper removal agent can be a reducing agent that reduces divalent copper ions to copper metal, such as metallic iron, for example, iron powder. Alternatively, the copper removal agent can also be a non-reducing type agent that converts divalent copper ions into a solid precipitate via a metathesis reaction, such as one or more of sodium sulfide or lithium sulfide.

In one embodiment, the copper removal agent can be a combined agent, for example, in addition to the above-mentioned reducing agent such as iron powder, it can also include the above-mentioned non-reducing type agent such as at least one of sodium sulfide or lithium sulfide, preferably lithium sulfide. The non-reducing type agent such as sodium sulfide or lithium sulfide can be added together with the reducing agent such as iron powder, in which case the non-reducing type agent such as sodium sulfide or lithium sulfide together with the reducing agent such as iron powder can be added all at once, or can be added in steps to achieve multiple copper removals. The non-reducing type agent such as sodium sulfide or lithium sulfide can also be added after the reducing agent such as iron powder, serving a secondary copper removal function, making the copper ion content in the copper removal liquid lower, thereby obtaining a higher quality product; in this case, the reducing agent can be added in one or more batches, and the non-reducing type agent can also be added in one or more batches. By using the copper removal agent, substantially all copper elements in the solution can be removed, thereby avoiding excessively high copper impurity content in the finally obtained precursor, which helps to improve the performance of the lithium iron phosphate material prepared therefrom.

Preferably, the copper removal agent is (reducing) metallic iron, such as iron powder. When metallic iron is used as the reducing agent, on one hand, it can effectively reduce copper ions, and on the other hand, since iron is a constituent element of lithium iron phosphate, no additional elements are introduced, thereby helping to reduce the introduction of impurities in the lithium iron phosphate prepared from the precursor, avoiding adverse effects on the performance of the lithium iron phosphate material, and improving the performance of the manufactured lithium iron phosphate material.

The copper removal treatment can be carried out by mixing the first treatment liquid with the copper removal agent and stirring.

In one embodiment, in step 1.3-1), relative to the copper ions contained in the first treatment liquid, the copper removal agent is used in excess. For example, relative to 1 mole of copper ions contained in the first treatment liquid, the amount of the copper removal agent can be 1.01-2.0 moles, for example, can be 1.01, 1.02, 1.03, 1.04, 1.05, 1.06, 1.07, 1.08, 1.09, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, or within a range defined by any two thereof.

Alternatively, for the convenience of calculation, the amount of the copper removal agent can also be measured relative to the mass of the solid material to be treated in step 1.1) taking into account the copper content in the solid material to be treated in step 1.1), provided that the copper removal agent is used in excess relative to the copper ions contained in the solid material to be treated in step 1.2) or in the first treatment liquid. For example, relative to 1 part by mass of the solid material to be treated in step 1.1), the amount of the copper removal agent (such as iron powder, or lithium sulfide or sodium sulfide) can be 0.01-0.10 parts by mass, preferably 0.02-0.05 parts by mass, for example, can be 0.01, 0.02, 0.03, 0.04, 0.05, 0.06, 0.07, 0.08, 0.09, 0.10 parts by mass, or within a range defined by any two thereof. Within the above amount range, it can be ensured that substantially all copper ions in the solution are removed, while not adding excessively high costs. Higher amounts of the copper removal agent can also be used, but from economic and environmental perspectives, this is not preferred.

The treatment can be carried out at a suitable temperature, for example, at a temperature of 20-60°C, such as 20, 25, 30, 35, 40, 45, 50, 55, 60°C, or within a temperature range defined by any two thereof.

After removing the copper ions, solid materials (including the formed solid precipitate (such as formed sponge copper, or copper sulfide) and possibly excess solid copper removal agent such as iron powder) can then be optionally removed to obtain a second treatment liquid. The removal can be carried out by any means known in the art, such as filtration, centrifugation, and/or decantation.

In step 1.3-2), the second treatment liquid is treated under an inert atmosphere with an excess of a reducing agent (capable of) reducing ferric ions to ferrous ions, to obtain a third treatment liquid.

In one embodiment, the inert atmosphere can be any non-oxidizing atmosphere, for example, nitrogen, helium, argon, etc. From the perspective of availability and cost, nitrogen is preferably used.

In one embodiment, an inert gas can be introduced into the second treatment liquid.

In one embodiment, the reducing agent is metallic iron, preferably iron powder. When metallic iron is used as the reducing agent, on one hand, it can effectively reduce ferric ions to ferrous ions, and on the other hand, since iron is a constituent element of lithium iron phosphate, it supplements iron while not introducing additional elements, thereby helping to reduce the introduction of impurities in the finally prepared lithium iron phosphate, avoiding adverse effects on the performance of the finally manufactured lithium iron phosphate material, and improving the performance of the manufactured lithium iron phosphate material.

The treatment can be carried out by mixing the second treatment liquid with the reducing agent and stirring.

The treatment can be carried out at any suitable temperature, for example, at a temperature of 20-60°C, such as 20, 25, 30, 35, 40, 45, 50, 55, 60°C, or within a temperature range defined by any two thereof.

In one embodiment, in step 1.3-2), relative to the iron ions contained in the second treatment liquid, the reducing agent is used in excess. For example, relative to 1 mole of iron ions contained in the second treatment liquid, the amount of the reducing agent can be 1.01-2.0 moles, for example, can be 1.01, 1.02, 1.03, 1.04, 1.05, 1.06, 1.07, 1.08, 1.09, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, or within a range defined by any two thereof.

Alternatively, for the convenience of calculation, the amount of the reducing agent can also be measured relative to the mass of the solid material to be treated in step 1.1) taking into account the total content of copper and iron elements in the solid material to be treated in step 1.1), provided that the reducing agent is used in excess relative to the iron ions contained in the second treatment liquid in step 1.3-2). For example, relative to 1 part by mass of the solid material to be treated in step 1.1), the amount of the reducing agent (such as iron powder) can be 0.01-0.20 parts by mass, preferably 0.02-0.05 parts by mass, for example, can be 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20 parts by mass, or within a range defined by any two thereof. Within the above amount range, it can be ensured that substantially all ferric ions in the solution are reduced to ferrous ions, while not adding excessively high costs. Higher amounts of the reducing agent can also be used, but from economic and environmental perspectives, this is not preferred.

After the reaction is completed, it is preferred not to separate the remaining solid reducing agent (excess iron powder) from the liquid, but to let the excess iron powder remain in the solution to keep the iron in the solution in a ferrous state without being oxidized.

The Ksp of aluminum phosphate is about 5.8*10⁻¹⁹, and the Ksp of iron phosphate is about 1.3*10⁻²², the two are very close, so ferric iron and aluminum ions are very easy to co-precipitate. By reducing ferric ions to ferrous ions, the loss of Fe due to subsequent co-precipitation with Al is avoided.

Considering that ferrous ions are easily oxidized to ferric ions in an air atmosphere, step 1.3) (or step 1.3-1) and step 1.3-2)), or at least step 1.3-2) is carried out in an inert atmosphere.

As described above, metallic iron, such as iron powder, can undergo a displacement reaction with copper ions to generate copper precipitate to achieve the purpose of copper removal; on the other hand, iron powder can also serve as a reducing agent to reduce ferric iron present in the solution to ferrous iron, without introducing new impurities. Therefore, in a preferred embodiment, step 1.3-1) can be carried out by using metallic iron, such as iron powder (reducing copper ions to metallic copper), and step 1.3-2) can also be carried out by using metallic iron, such as iron powder (reducing ferric ions to ferrous ions). In this case, step 1.3-1) and step 1.3-2) can be carried out separately (i.e., as described above, first adding metallic iron, such as iron powder, to the first treatment liquid for copper removal, and then after optionally removing the formed metallic copper, adding metallic iron, such as iron powder, to the obtained second treatment liquid to reduce ferric ions to ferrous ions, to obtain the third treatment liquid), or can be carried out in a combined manner (i.e., adding metallic iron, such as iron powder, to the first treatment liquid for copper removal and reducing ferric ions to ferrous ions, to obtain the third treatment liquid).

Preferably, by using metallic Fe, such as iron powder, copper ions are removed from the first treatment liquid and ferric ions are reduced to ferrous ions to obtain the third treatment liquid. In this case, metallic Fe, such as iron powder, is used in excess relative to the copper ions and iron ions present in the first treatment liquid. For example, relative to 1 mole of the total amount of copper ions and iron ions contained in the first treatment liquid, the amount of metallic iron, such as iron powder, can be 1.01-2.0 moles, for example, can be 1.01, 1.02, 1.03, 1.04, 1.05, 1.06, 1.07, 1.08, 1.09, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, or within a range defined by any two thereof.

Alternatively, for the convenience of calculation, the amount of metallic Fe, such as iron powder, can also be measured relative to the mass of the solid material to be treated in step 1.1) taking into account the total content of copper and iron in the solid material to be treated in step 1.1), provided that it is used in excess relative to the total amount of copper ions and ferric ions contained in the first treatment liquid of step 1.1). For example, relative to 1 part by mass of the solid material to be treated in step 1.1), the amount of metallic Fe, such as iron powder, can be 0.01-0.20 parts by mass, preferably 0.02-0.10 parts by mass, for example, can be 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20 parts by mass, or within a range defined by any two thereof. Within the above amount range, it can be ensured that substantially all copper ions in the solution are removed and substantially all ferric ions are reduced to ferrous ions, while not adding excessively high costs.

### Step 1.4)

In step 1.4), in the presence of a reducing agent for ferric ions, a pH adjusting agent is added to the third treatment liquid to adjust a pH value to 2.8-4.0, then a formed precipitate is removed ("pH value adjustment to remove aluminum" in Fig. 1), to obtain a fourth treatment liquid ("fourth treatment liquid" in Fig. 1).

The reducing agent is, for example, the reducing agent used in step 1.3-2) described above. For example, the reducing agent is metallic iron, such as iron powder.

The pH adjusting agent includes, but is not limited to, at least one of the following: basic lithium-containing substances such as lithium carbonate, lithium hydroxide, lithium bicarbonate, lithium oxalate, lithium phosphate, iron-containing substances (such as basic iron-containing substances) such as ferrous hydroxide, iron hydroxide, iron oxide, triiron tetraoxide, iron carbonate, iron phosphate, iron powder, and phosphorus sources such as phosphoric acid, lithium phosphate, and lithium phosphate, etc. When using the above-mentioned lithium, iron, and phosphorus-containing reagents as the pH adjusting agent, compared with traditional pH adjusting agents such as liquid caustic, ammonia water, calcium oxide, sodium carbonate, etc., the introduction of new impurity elements into the system can be avoided, thereby avoiding the subsequent washing of the lithium iron phosphate product with a large amount of pure water to remove impurity elements such as sodium and sulfur. In addition, the ratio among lithium, iron, and phosphorus can also be effectively adjusted, reducing the introduction of other reagents in the subsequent steps, simplifying the process, and saving costs.

In this step, a pH value is adjusted to 2.8-4.0, preferably 3.5-4.0, for example, a pH value can be adjusted to 2.8, 2.9, 3.0, 3.1, 3.2, 3.3, 3.4, 3.5, 3.6, 3.7, 3.8, 3.9, 4.0, or within a range defined by any two thereof.

When the pH is adjusted to the above range, for example, the preferred range, impurity elements such as Al and Ti contained in the solution will precipitate out in the form of phosphate precipitates. By removing these precipitates, impurities such as Al and Ti in the solution can be substantially removed.

This step 1.4) can be carried out under an air atmosphere or under an inert atmosphere, preferably under an inert atmosphere.

### Step 1.5)

In step 1.5), a pH value of the fourth treatment liquid is adjusted to 0.2-0.8, a molar ratio of Li, Fe, P in the fourth treatment liquid is adjusted to Li:Fe:P= 0.95-1.05: 0.95-1: 1; and the Fe element content is adjusted to 60 g/L to 210 g/L ("adjust element ratio, Fe concentration" in Fig. 1), to obtain a fifth treatment liquid as the raw material aqueous solution ("raw material aqueous solution" in Fig. 1).

The adjustment of the pH value in step 1.5) can be carried out using the same acid as that used in the leaching process in step 1.2).

Preferably, the adjustment of the pH value in step 1.5) is carried out using the same acid solution as that used in the leaching process in step 1.2).

Alternatively or additionally, it can be carried out using an acid solution recovered from the acid solution used in excess in the leaching process in step 1.2).

Therefore, the description for the acid used in step 1.2) above is also applicable here. It will not be repeated here.

The adjustment of the Li, Fe, P molar ratio can be carried out by adding at least one of a lithium source, an iron source, or a phosphorus source.

The Li source, Fe source, P source are preferably sources that do not introduce other impurities into the final precursor. The Li source, Fe source, P source can be provided as respective independent sources (i.e., one source compound provides only one of Li, Fe, P elements), or can be provided as a combined source of two thereof (i.e., one source compound provides two of Li, Fe, P elements simultaneously, such as lithium phosphate, iron phosphate). Preferably, when a lithium source is (needed to be) used, the lithium source is lithium carbonate, lithium hydroxide, lithium bicarbonate, lithium oxalate, lithium phosphate, lithium monohydrogen phosphate, lithium dihydrogen phosphate, or any combination thereof. Preferably, when an Fe source is (needed to be) used, the Fe source is ferrous hydroxide, iron powder, iron oxide, triiron tetraoxide, iron hydroxide, iron carbonate, iron phosphate, or any combination thereof. Preferably, when a P source is (needed to be) used, the P source is phosphoric acid, lithium phosphate, iron phosphate, or any combination thereof. The lithium source, Fe source and P source can be the same as or different from each other.

A molar ratio of Li, Fe, P in the fourth treatment liquid can be adjusted to 0.95-1.05: 0.95-1: 1.

For example, a molar ratio of Li, Fe, P in the fourth treatment liquid can be adjusted such that, in the fifth treatment liquid, relative to 1 mole of P element, the Li element is 0.95-1.05 moles, such as 0.95, 0.96, 0.97, 0.98, 0.99, 1.00, 1.01, 1.02, 1.03, 1.04, 1.05 moles, or within a range defined by any two thereof.

For example, a molar ratio of Li, Fe, P in the fourth treatment liquid can be adjusted such that, in the fifth treatment liquid, relative to 1 mole of P element, the iron element is 0.95-1.00 moles, such as 0.95, 0.96, 0.97, 0.98, 0.99, 1.00 moles, or within a range defined by any two thereof.

A molar ratio of Li, Fe, P can be obtained by measuring the respective contents of Li, Fe, P, and then calculating the ratio therebetween. The contents of Li, Fe, P can be measured by any suitable method known in the art, such as by using inductively coupled plasma atomic emission spectroscopy (ICP).

By adjusting a molar ratio of Li, Fe, P in the fourth treatment liquid to 0.95-1.05: 0.95-1: 1, a molar ratio of Li, Fe, P in the precursor generated in the subsequent process can be controlled, thereby controlling a molar ratio of Li, Fe, P in the finally formed lithium iron phosphate product. Moreover, since a molar ratio of Li, Fe, P is adjusted in the solution, the Li, Fe, P elements can achieve mixing at the molecular level, so that the Li, Fe, P in the finally obtained lithium iron phosphate material are uniformly distributed, thereby achieving excellent performance.

Step 1.5) also includes, after adjusting a molar ratio of Li, Fe, P, adjusting the Fe element content of the solution to 60 g/L to 210 g/L. This adjustment can be carried out, for example, by any means known in the art (for example, concentration by means of distillation, evaporation, etc.). The skilled person can understand that, when the Fe element content in the solution after adjusting a molar ratio of Li, Fe, P is already 60 g/L to 210 g/L, concentration may not be carried out.

When adjustment (concentration) is carried out, this adjustment (concentration) is carried out until the iron element content in the treated fourth treatment liquid is 60 g/L to 210 g/L, such as 150 g/L to 200 g/L. For example, the iron element content can be 60, 65, 70, 75, 80, 85, 90, 95, 100, 105, 110, 115, 120, 125, 130, 135, 140, 145, 150, 155, 160, 165, 170, 175, 180, 185, 190, 195, 200, 205, 210 g/L, or within a range defined by any two thereof. By controlling the content of the iron element, on one hand, the energy consumption during spray sintering can be reduced, and on the other hand, the particle size of the particles obtained by spray sintering can be controlled, which is beneficial to reducing the sintering time for the synthesis of lithium iron phosphate and reducing the synthesis cost.

The iron element concentration in the solution here can be carried out by any suitable method known in the art. For example, it can be measured by inductively coupled plasma optical emission spectroscopy (ICP). Alternatively, it can also be calculated based on the concentration of the iron element measured in step (6), the volume of the solution entering step (6), and the volume of the solution remaining in this step (7).

This adjustment (concentration) is preferably carried out at a temperature of 60-110°C. For example, the temperature can be 60, 65, 70, 75, 80, 85, 90, 95, 100, 105, 110 or within a range defined by any two thereof.

The heat used for this adjustment (concentration) can be provided by any form of heat source. In a preferred embodiment, the heat used for this concentration is at least partially provided by the sintering exhaust gas generated by the spray pyrolysis in step (2). In a preferred embodiment, under steady-state conditions, this heat is entirely provided by the sintering exhaust gas generated by the spray pyrolysis in (2).

When the raw material aqueous solution is prepared from spent lithium iron phosphate batteries by the method of the present invention to thereby prepare the lithium iron phosphate composite precursor (i.e., step (1) is carried out through steps 1.1)-1.5)), on one hand, since a molar ratio of Li, Fe, P of the precursor synthesized by the present invention corresponds to a molar ratio of Li, Fe, P in the final lithium iron phosphate material, the required amount of Li source and Fe source, especially the required amount of the expensive Li source, for the subsequent preparation of lithium iron phosphate is reduced, and there is no need to purchase lithium materials to prepare the lithium iron phosphate composite precursor, thereby reducing the manufacturing cost of the lithium iron phosphate material, and eliminating the process and energy required for the decomposition of raw materials such as lithium carbonate, so that compared with the methods and precursors in the prior art, the sintering time for synthesizing lithium iron phosphate can be reduced, and the synthesis cost can be reduced. At the same time, there is also no need to further separate lithium from the spent lithium iron phosphate battery materials separately, and it can be directly obtained and utilized, reducing the recycling cost, and shortening the element circulation and turnover period, improving the element utilization efficiency. On the other hand, when manufacturing a lithium iron phosphate product using the precursor synthesized from spent lithium iron phosphate batteries by the method of the present invention, the obtained lithium iron phosphate product has a low impurity content, reducing the adverse effects of impurities on the product performance; in the preparation process, the Li, Fe, P elements are mixed at the molecular level, thereby ensuring the compositional uniformity of the lithium iron phosphate material prepared therefrom, achieving uniform distribution of lithium, iron and phosphorus elements at the molecular level, which is beneficial to controlling the crystal structure, orientation and morphology of the lithium iron phosphate material prepared therefrom, and is thus beneficial to achieving better electrochemical performance of the lithium iron phosphate material: the finally prepared lithium iron phosphate material has excellent electrochemical performance, which can achieve performance comparable to, or even better than, that of the fresh lithium iron phosphate material used in the initial manufacturing process of the spent lithium iron phosphate battery used as the raw material, such as first cycle efficiency, first discharge capacity, etc.

### Step (2)

In step (2), the raw material aqueous solution prepared in step (1) or the fifth treatment liquid obtained in step 1.5) is subjected to spray pyrolysis ("spray pyrolysis" in Fig. 1) under an aerobic environment at 400°C to 800°C to obtain the lithium iron phosphate composite precursor ("lithium iron phosphate composite precursor" in Fig. 1). The spray pyrolysis (or referred to as spray sintering) can be carried out at a temperature of 400°C to 800°C, preferably 650°C to 750°C. For example, the temperature can be 400, 450, 500, 550, 600, 650, 700, 750, 800°C, or within a range defined by any two thereof.

The spray pyrolysis is carried out in an aerobic environment. The aerobic environment can be, for example, an air environment.

By carrying out the spray pyrolysis within the above temperature range and under an aerobic environment, the previously reduced ferrous iron is fully oxidized to ferric iron, effectively ensuring the composition and morphological characteristics of the obtained lithium iron phosphate composite precursor, which is further beneficial to controlling the crystal structure, orientation and morphology of the lithium iron phosphate material prepared therefrom. Therefore, the finally prepared lithium iron phosphate material has excellent electrochemical performance, which can achieve performance comparable to, or even better than, that of the fresh lithium iron phosphate material used in the initial manufacturing process of the spent lithium iron phosphate battery used as the raw material, such as first cycle efficiency, first discharge capacity, etc. At the same time, using the oxygen in the spray pyrolysis environment (which can be oxygen in the air) to directly oxidize ferrous iron eliminates the need for an oxidizing agent required in solution oxidation, saving the oxidation cost, whereas in the prior art, spray pyrolysis is mostly carried out in an oxygen-free protective atmosphere to ensure the presence of ferrous iron in the product, and the protective gas is much more costly compared to free air.

When the spray pyrolysis is carried out using the fifth treatment liquid obtained in step 1.5) above, a second effluent containing water vapor and HCl is also generated as the sintering exhaust gas (corresponding to "HCl recovery" in Fig. 1).

For example, the spray sintering is carried out in a synthesis furnace, wherein the synthesis furnace is under an oxidizing atmosphere, preferably an air atmosphere, at a temperature of 400°C to 800°C, preferably 650°C to 750°C. For example, the temperature can be 400, 450, 500, 550, 600, 650, 700, 750, 800°C, or within a range defined by any two thereof.

This temperature/heat of the synthesis furnace can be provided by any form of heat source. In one embodiment, it is provided by the combustion of natural gas.

The spray sintering is carried out by spraying the raw material aqueous solution from top to bottom, and then sintering.

For example, in the spray sintering, the raw material aqueous solution is pumped into the synthesis furnace, enters the synthesis furnace through the atomization device at the top of the synthesis furnace to be atomized, forming liquid droplets, and the liquid droplets are sintered during the top-to-bottom process under the action of gravity, thereby being synthesized into the lithium-containing precursor. The synthesized precursor deposits at the bottom of the furnace due to gravity, and is discharged after cooling at the bottom of the furnace to be the finished precursor product.

In a preferred embodiment, the second effluent (sintering exhaust gas) is fed (for example, by negative pressure) to the concentrator used in the concentration treatment in step (7), so as to use the second effluent as the heat source of the concentrator to heat the fifth treatment liquid. Thus, the heat of the sintering exhaust gas can be used to evaporate water and HCl.

The tail gas (third effluent) coming from the second effluent and exiting from the concentrator contains (a small part of) heat, water vapor and (a large amount of) HCl. In one embodiment, the tail gas (third effluent and/or first effluent) leaving the concentrator is sent to an absorption tower for heat recovery and HCl absorption.

In one embodiment, circulating cooling water is arranged inside the absorption tower to absorb heat.

In a preferred embodiment, spray water is arranged at the upper part of the absorption tower to absorb HCl in the tail gas.

In a preferred embodiment, hydrochloric acid formed by absorption in the absorption tower is collected into a regenerated acid storage tank.

In a preferred embodiment, the recovered hydrochloric acid is transferred to a dissolution area for reuse.

In a preferred embodiment, the tail gas leaving the absorption tower is discharged from the top of the absorption tower.

In a preferred embodiment, the tail gas leaving the absorption tower, for example, the tail gas discharged from the top of the absorption tower, is introduced into a washing tower.

In a preferred embodiment, pure water spray is arranged at the upper part of the washing tower to absorb residual HCl in the tail gas.

In a preferred embodiment, the spray water after absorbing HCl enters the washing water storage tank from the bottom of the washing tower.

In a preferred embodiment, the washing water is transferred to the absorption tower as the absorption tower spray water.

In a preferred embodiment, the washed tail gas is discharged from the top of the washing tower.

Using the process of the present invention, the sintering exhaust gas can be conveniently treated (for example, energy recycling and material recycling), thereby improving the energy utilization efficiency of the process, and effectively recovering HCl and water, thereby significantly reducing the generation of wastewater, and further reducing the need for and cost of further wastewater treatment. Moreover, the waste liquid mainly contains HCl and water, which can be conveniently recycled and reused, thereby reducing environmental pollution, and can reduce the demand for external HCl in the process, thereby further reducing the process cost.

The product prepared according to the method of the second aspect of the present invention is the lithium iron phosphate composite precursor described in the first aspect of the present invention. Therefore, all the descriptions above for the "lithium iron phosphate composite precursor" in the first aspect are also applicable here.

Thus, in one aspect, the present invention also relates to the lithium iron phosphate composite precursor obtained by the method of the second aspect of the present invention.

The lithium iron phosphate composite precursor of the present invention or prepared by the method of the present invention has more excellent performance through the improvement of components, and makes the overall cost of the lithium iron phosphate battery positive electrode material prepared therefrom lower; through the improvement of the preparation method of the lithium iron phosphate composite precursor, the characteristics of the product are effectively ensured, and efficient, low-cost, and green recycling of spent lithium iron phosphate batteries is realized, having broad industrial application prospects.

### EXAMPLES

In order to make the objectives, technical solutions, and advantages of the present invention clearer, the present invention is further described in detail below in conjunction with examples. It should be understood that the examples described here are only used to explain the present invention and are not intended to limit the present invention.

### Preparation Example 1: Preparation of Lithium Iron Phosphate Composite Precursor

Spent lithium iron phosphate batteries were sequentially subjected to discharging, dismantling, and sieving to obtain positive electrode plates. The positive electrode plates were crushed and then sieved through a circular vibratory sieve to remove the upper layer aluminum foil, thereby obtaining a solid material to be treated containing lithium iron phosphate powder.

To 100 g of the above dismantled solid material to be treated, 3000 g of water was added, stirred to prepare a slurry for 4 h, then 70 g of 20 wt% hydrochloric acid solution was added, and the mixture was continued to be leached with hydrochloric acid under stirring for 8 h, and then filtered to obtain a mixed solution containing Li, Fe, and P after leaching.

2 g of iron powder was added to the above mixed solution and stirred for 1 h, and then solids were removed by filtration (copper removal).

Then, 2 g of iron powder was added under stirring, and nitrogen was simultaneously introduced into the solution.

After 2 h, a lithium hydroxide solution (calculated as a lithium element concentration of 20 g/l) was added to adjust a pH value to 3.5, and the formed solid precipitate was removed by filtration to obtain a mixed solution containing Li, Fe, and P.

Then, using 20 wt% hydrochloric acid solution, a pH value of the mixed solution was adjusted to 0.2, and 3.5 g of 85 wt% phosphoric acid was added so that a molar ratio of Li, Fe, P was 1:1:1 (detected by ICP).

The obtained solution was transferred to a synthesis furnace. The synthesis furnace comprised a concentration section and a spray drying section. Natural gas was combusted to generate heat to heat up the entire furnace body, wherein the synthesis furnace was first heated up to 700°C. During the heating-up process, the negative pressure system was started, and the concentrator circulation was started. After the internal temperature of the synthesis furnace reached 700°C, the prepared fifth treatment liquid was introduced into the concentrator. After the iron element in the raw material in the concentrator reached a concentration of 180 g/L, the concentrated solution was pumped into the synthesis furnace, entered the synthesis furnace through the atomization device at the top of the synthesis furnace to be atomized, forming small liquid droplets. The small liquid droplets were sintered during the top-to-bottom process under the action of gravity; the synthesis furnace was under an air atmosphere, and the sintering temperature was 700°C. The sintering synthesized the lithium-containing precursor. The synthesized precursor deposited at the bottom of the furnace due to gravity, and was discharged after cooling at the bottom of the furnace to be the finished precursor product.

### Preparation Examples 2-3: Preparation of Lithium Iron Phosphate Composite Precursor

The lithium iron phosphate composite precursor was prepared in the same manner as in Preparation Example 1, except that the process conditions were changed as shown in Table 1 below.

**Table 1**

| Prepara tion Exampl e No. | Lithium hydroxi de adjuste d pH to | Then hydroch loric acid adjusted pH to | Li, Fe, P molar ratio Adjustment | | Iron element concentra tion (g/L) concentra ted to | Spray pyrolys is tempera ture (°C) |
|---|---|---|---|---|---|---|
| | | | Adjusting agent used | Li, Fe, P molar ratio adjusted to | | |
| 1 | 3.5 | 0.2 | 3.5 g of 85 wt% phosphoric acid | 1:1:1 | 180 | 700 |
| 2 | 2.8 | 0.5 | 2.6 g of 85 wt% phosphoric acid | 0.95:0 .95:1 | 60 | 600 |
| 3 | 4.0 | 0.8 | 5.2 g of 85 wt% phosphoric acid | 1.05:1 :1 | 210 | 800 |

### Example 1: Preparation of Lithium Iron Phosphate

2198 g of the lithium iron phosphate composite precursor of Preparation Example 1, 160 g of anhydrous glucose (Xiwang Group, GB/T20880), and 60 g of PEG 1500 (Sinopharm Chemical Reagent Co., Ltd., Q/CYDZ2317-2009) were weighed, mixed together, added into 3500 g of pure water, and stirred and mixed for 30 minutes until all raw materials were uniformly mixed and became slurry-like. Then the slurry was spray-dried at 180°C. The obtained dry powder was placed in an atmosphere furnace for sintering under nitrogen atmosphere protection, the temperature was uniformly raised from room temperature to 750°C over 4 hours, sintered for 8 hours, and cooled to room temperature under nitrogen atmosphere protection to obtain carbon-coated lithium iron phosphate. The obtained carbon-coated lithium iron phosphate was pulverized using an air jet mill, and the pulverized material was the lithium iron phosphate.

### Examples 2-3: Preparation of Lithium Iron Phosphate

Lithium iron phosphate was prepared in the same manner as in Example 1, except as follows: the lithium iron phosphate composite precursors of Preparation Examples 2-3 were respectively used instead of the lithium iron phosphate composite precursor of Preparation Example 1.

### Evaluation Examples

### Evaluation Example 1: X-ray Diffraction (XRD)

X-ray diffraction (XRD) analysis was carried out on the precursor prepared in Preparation Example 1 under the following conditions: Rigaku UItima IV was used as the testing instrument, Cu target, wavelength λ=1.5406 Å, accelerating voltage: 40 KV, accelerating current: 40 mA, scanning range: 10-80°, scanning speed: 5°/min, step size: 0.002°.

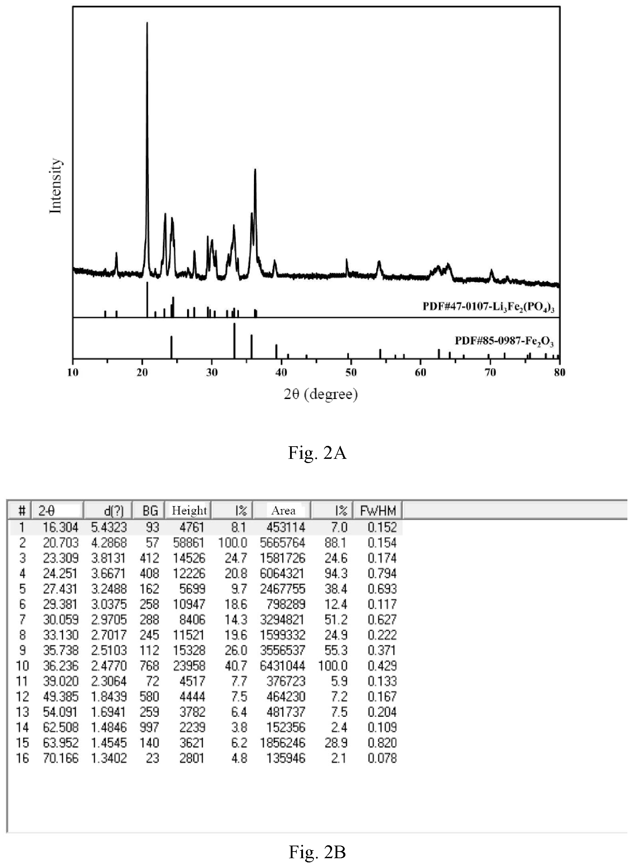

The results are shown in Figs. 2A-2B. According to Figs. 2A-2B, it can be seen that the XRD diffraction peaks of the obtained precursor completely match the diffraction peaks of the two components Li₃Fe₂(PO₄)₃ and Fe₂O₃. The Li₃Fe₂(PO₄)₃ in the sample matches well with the standard card PDF#47-0107, belonging to the monoclinic crystal system, space group P21/n, with lattice parameters of a=0.8566 nm, b=1.2053 nm, c=0.8596 nm, respectively; the sample also contains diffraction peaks of Fe₂O₃ of the hematite phase, which match well with the standard card PDF#85-0987, belonging to the hematite phase. Wherein the peak at 2θ=20.7° is the characteristic peak of Li₃Fe₂(PO₄)₃, and the peak at 2θ=35.7° is the characteristic peak of Fe₂O₃, indicating that the obtained precursor is composed of the two components Li₃Fe₂(PO₄)₃ and Fe₂O₃.

### Evaluation Example 2: Scanning Electron Microscope

Scanning electron microscope (SEM) analysis was carried out on the precursor prepared in Preparation Example 1 under the following conditions: a tungsten filament scanning electron microscope VEGA LMS from TESCAN was used, with an accelerating voltage of 10 keV, and magnifications of 1000 times and 30000 times, respectively.

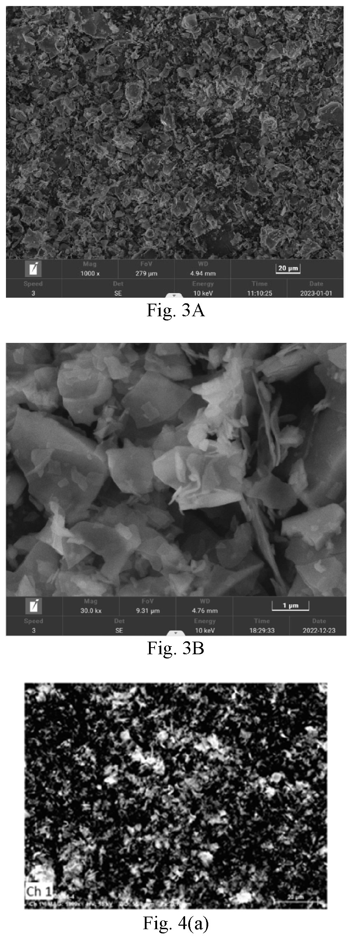

The results are shown in Figs. 3A-3B. From Figs. 3A-3B, it can be seen that the precursor prepared in Preparation Example 1 is mainly in the form of a flaky aggregate of fragments formed by the crushing of hollow spheres.

### Evaluation Example 3: Energy Dispersive X-ray Spectroscopy (EDS) Analysis

EDS analysis was carried out on the precursor prepared in Preparation Example 1 using an instrument model XFlash Detector 630M manufactured by Bruker, Germany, under the following conditions: accelerating voltage: 15 keV, conductive adhesive: double-sided carbon conductive adhesive, working distance: 15 mm.

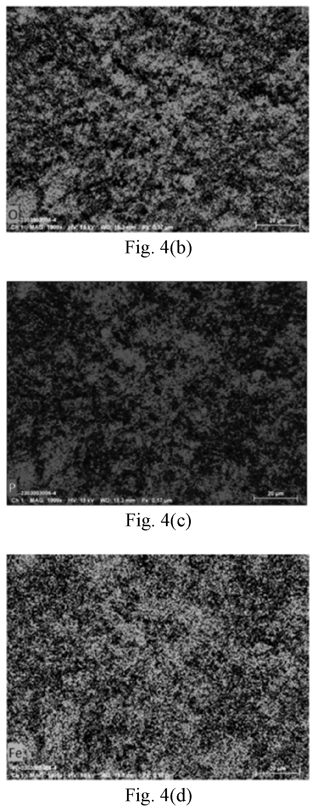

The results are shown in Figs. 4(a)-4(d). From Figs. 4(a)-4(d), it can be seen that the Fe, O and P elements are uniformly distributed in the precursor.

### Evaluation Example 4: Element Content Analysis

For the lithium iron phosphate composite precursors prepared in Preparation Examples 1-3 and the lithium iron phosphate prepared in Examples 1-3, the contents of elements other than C were measured as follows using inductively coupled plasma atomic emission spectroscopy (ICP).

First, a lithium iron phosphate composite precursor sample solution and a lithium iron phosphate sample solution were prepared: accurately weigh 0.3500 g of the sample, add 6 mL of hydrochloric acid and 2 mL of water, place on a hot plate and heat at a temperature of 200°C for 30 min, cool to room temperature, and after suction filtration, the impurity elements are to be tested.

For the contents of Li, Fe, and P in each sample, the standard curve method was used for element content determination, wherein before testing, a mixed standard curve was prepared with concentrations of Li: 1.00, 2.00, 3.00, 4.00, 5.00 µg/mL; Fe: 10.00, 20.00, 30.00, 40.00, 50.00 µg/mL; P: 5.00, 10.00, 15.00, 20.00, 25.00 µg/mL. After cooling and suction filtration according to the digestion method, the samples were diluted 100 times for the measurement of the above main element contents.

For elements such as Na, K, Ca, Cu, Ni, Cr, Zn, Mg, Al, S, Ni, Cr in the samples, the standard addition method was used for measurement, wherein before the sample solution was made up to volume, a mixed standard solution was sequentially added to the 4 parallel digested sample solutions of the same sample. After the addition of the standard was completed, the volume was made up to 25 mL and the samples were thoroughly shaken on a shaker, so that the element standard solution concentrations added to the samples after volume make-up were: 0 µg/mL, 0.2 µg/mL, 0.4 µg/mL, 0.8 µg/mL. After mixing, the samples were ready for testing.

The specific settings of the sample introduction system are as follows.

| Instrument Model | ICP-6800 | Plasma Parameters | |
|---|---|---|---|
| Observation Mode | Radial View | Pump Speed | 50 rpm |
| Sample Introduction System | | RF Power | 1150 W |
| Accessories | | Nebulizer Gas | 0.7 L/min |
| Central Tube | 1.5 mm Quartz Central Tube | Auxiliary Gas | 0.5 L/min |
| Spray Chamber | High-Efficiency Cyclonic Spray Chamber | Coolant Gas | 12 L/min |
| Nebulizer | Concentric Nebulizer | Integration Time | 20 seconds |

A standard working curve was made based on the standard sample testing, and then the samples to be tested were detected. Based on the detected values of the samples to be tested, the corresponding contents were obtained from the standard curve.

The C content, magnetic impurities, and H₂O content in the lithium iron phosphate composite precursor and the lithium iron phosphate material were measured according to GB/T 33822-2017.

The results are shown in Tables 2 and 3 below. From Tables 2-3, it can be seen that the lithium iron phosphate composite precursor materials prepared in Preparation Examples 1-3 and the lithium iron phosphate materials prepared in Examples 1-3 have very low impurity contents.

### Evaluation Example 5: Measurement of Particle Size, Specific Surface Area, Pressed Density, Tap Density, pH

For the lithium iron phosphate composite precursor materials prepared in Preparation Examples 1-3 and the lithium iron phosphate materials prepared in Examples 1-3, the pressed density was measured according to GB/T 30835-2014, and the particle size, specific surface area, pressed density, tap density, and pH were measured according to GB/T 33822-2017.

The results are shown in Table 2 below.

**Table 2: Properties of the Lithium Iron Phosphate Composite Precursor**

| Item | Measured Value | | |
|---|---|---|---|
| | Preparation Example 1 | Preparation Example 2 | Preparation Example 3 |
| Pressed density (PD) | 5.41 | 6.08 | 6.3 |
| Tap density (TD) | 0.55 | 0.61 | 0.69 |
| Specific surface (BET, m²/g) | 12.3 | 12.8 | 12.9 |
| Magnetic impurities (MI, % by mass) | 0.41 | 0.33 | 0.26 |
| H₂O (ppm by mass) | 510 | 431 | 560 |
| D₁₀ (µm) | 0.49 | 0.49 | 0.48 |
| D₅₀ (µm) | 1.7 | 1.5 | 1.3 |
| D₉₀ (µm) | 9.8 | 10.1 | 10.0 |
| D₁₀₀ (µm) | 22 | 23 | 21 |
| Na (ppm by mass) | 87 | 64 | 73 |
| K (ppm by mass) | 9 | 13 | 17 |
| Ca (ppm by mass) | 62 | 41 | 52 |
| Cu (ppm by mass) | 4 | 3.1 | 3.8 |
| Ni (ppm by mass) | 12 | 19 | 9 |
| Cr (ppm by mass) | 37 | 25 | 23 |
| Zn (ppm by mass) | 25 | 16 | 19 |
| Mg (ppm by mass) | 24 | 15 | 31 |
| Al (ppm by mass) | 18 | 26 | 21 |
| S (ppm by mass) | 36 | 25 | 31 |
| Li (% by mass) | 4.21 | 4.1 | 4.23 |
| P (% by mass) | 18.1 | 18.5 | 17.8 |
| Fe (% by mass) | 33.2 | 33.0 | 33.9 |

### Evaluation Example 6: Electrochemical Performance Evaluation of Lithium Iron Phosphate Materials

The lithium iron phosphate prepared in Examples 1-3, PVDF (Arkema, France, HSV900), and conductive carbon black (TIMCAL, Super P) were mixed in a mass ratio of 90:5:5 in a solvent (NMP), and stirred uniformly to obtain a slurry. Then the obtained slurry was coated on an aluminum foil, and then dried at a temperature of 100°C for 1.5 h. After rolling, a positive electrode plate was obtained, wherein the areal density of the electrode plate was 10 mg/cm², and the pressed density of the electrode plate was 2.1 g/cm³. It was then punched into a positive electrode circular plate with a diameter of 14 mm. After weighing, it was placed in a vacuum drying oven and dried at 0.1 MPa and 85°C for 8 h to obtain a positive electrode circular plate.

In an argon glove box, the positive electrode circular plate, a lithium circular plate as the counter electrode, a separator (PP-PE-PP composite film), and an electrolyte (Tinci (Tianci) Materials, TC-E sample K) were assembled into a LIR2016 model coin cell.

Charge-discharge test procedure: The assembled coin cell was tested at room temperature under the first charge-discharge procedures of 0.1C charge, 0.1C discharge; 0.2C charge, 0.2C discharge; 0.2C charge, 0.5C discharge; 0.2C charge, 1.0C discharge, respectively, wherein the charge-discharge cut-off voltage was 2.0-3.95V.

The electrochemical performance of the prepared lithium iron phosphate materials is shown in Table 3 below.

**Table 3: Performance Comparison of the Unused Lithium Iron Phosphate Material Before Recycling and the Lithium Iron Phosphate Materials of Examples 1-3**

| Item | Measured Value | | | |
|---|---|---|---|---|
| | Unused lithium iron phosphate material before recycling | Lithium iron phosphate material of Example 1 | Lithium iron phosphate material of Example 2 | Lithium iron phosphate material of Example 3 |
| Li (% by mass) | 4.41 | 4.52 | 4.41 | 4.71 |
| P (% by mass) | 19.46 | 19.71 | 19.83 | 19.33 |
| Fe (% by mass) | 34.21 | 34.09 | 33.5 | 34.81 |
| Carbon content (% by mass) | 1.30 | 1.33 | 1.28 | 1.25 |
| Pressed density (PD) | 2.47 | 2.48 | 2.46 | 2.44 |
| Tap density (TD) | 0.85 | 0.81 | 0.88 | 0.80 |
| Specific surface (BET, m²/g) | 13.0 | 13.2 | 13.3 | 1.53 |
| Magnetic impurities (MI, % by mass) | 0.41 | 0.4 | 0.33 | 0.29 |
| H₂O (ppm by mass) | 510 | 548 | 510 | 550 |
| pH | 8.6 | 8.7 | 8.5 | 8.8 |
| D₁₀ (µm) | 0.49 | 0.47 | 0.49 | 0.48 |
| D₅₀ (µm) | 1.7 | 1.6 | 1.4 | 1.2 |
| D₉₀ (µm) | 9.8 | 9.5 | 9.4 | 9.7 |
| D₁₀₀ (µm) | 22 | 21 | 24 | 22 |
| Na (ppm by mass) | 87 | 90 | 77 | 69 |
| K (ppm by mass) | 9 | 8 | 15 | 19 |
| Ca (ppm by mass) | 62 | 65 | 55 | 49 |
| Cu (ppm by mass) | 4 | 4 | 3.8 | 3.5 |
| Ni (ppm by mass) | 12 | 14 | 19 | 9 |
| Cr (ppm by mass) | 37 | 36 | 25 | 23 |
| Zn (ppm by mass) | 25 | 27 | 16 | 19 |
| Mg (ppm by mass) | 24 | 20 | 15 | 31 |
| Al (ppm by mass) | 18 | 16 | 16 | 21 |
| Ni (ppm by mass) | 15 | 14 | 25 | 21 |
| First coulombic efficiency (%) | 97.3 | 98.7 | 98.1 | 98.9 |
| 0.1C first discharge capacity (mAh/g) | 159.9 | 161.5 | 159.3 | 160.8 |
| 0.2C first discharge capacity (mAh/g) | 157.1 | 159.1 | 158.4 | 159.2 |
| 1.0C first discharge capacity (mAh/g) | 146.4 | 146.4 | 145.8 | 156.8 |

From Tables 2-3 above, it can be seen that the precursors prepared in Preparation Examples 1-3 have very low impurity contents, so that the lithium iron phosphate materials of Examples 1-3 prepared therefrom are very similar to the unused (fresh) lithium iron phosphate battery material before recycling in terms of impurity element content, and have comparable or slightly higher first coulombic efficiency, 0.1C, and 0.2C first discharge capacities and the same 1.0C first discharge capacity. Without being bound by theory, the excellent electrochemical performance is believed to be attributed to the uniform elemental distribution and the specific composition of the precursor, resulting in uniform distribution of Li, Fe, P elements in the final lithium iron phosphate material, as well as better control of the crystal structure, orientation and morphology.

The precursor for lithium iron phosphate prepared by the method of the present invention using spent lithium iron phosphate batteries as raw materials has excellent performance, which has performance comparable to, or even slightly better than, that of lithium iron phosphate materials synthesized by conventional methods. In addition, since spent lithium iron phosphate batteries are used as raw materials, the preparation of the product has a cost advantage and is suitable for mass production, while also realizing the cyclic utilization of lithium-ion battery materials. Furthermore, using the method of the present invention, HCl and water generated during the synthesis process can be conveniently recycled and reused, reducing wastewater, therefore, it is more green and environmentally friendly. In addition, since the process of preparing lithium iron phosphate does not involve energy-consuming processes such as the decomposition of lithium carbonate, the sintering time for synthesizing lithium iron phosphate is reduced, and the synthesis cost is reduced.

The above described are only exemplary embodiments of the present invention. It should be pointed out here that, for those of ordinary skill in the art, without departing from the inventive concept of the present invention, developments can also be made to the present invention, but these all belong to the protection scope of the present invention.

## Claims

1. A lithium iron phosphate composite precursor, **characterized by** comprising a Li₃Fe₂(PO₄)₃ component and a Fe₂O₃ component, wherein a molar ratio of main elements of the precursor Li:Fe:P = (0.95-1.05): (0.95-1): 1.

2. The lithium iron phosphate composite precursor according to claim 1, **characterized in that** the Li₃Fe₂(PO₄)₃ component belongs to P21/n space group.

3. The lithium iron phosphate composite precursor according to claim 1, **characterized in that** the Li₃Fe₂(PO₄)₃ component is monoclinic crystal system, and/or the Fe₂O₃ component is hematite phase.

4. The lithium iron phosphate composite precursor according to claim 3, **characterized in that** lattice parameters of the monoclinic crystal system are a=0.8566 nm, b=1.2053 nm, c=0.8596 nm.

5. The lithium iron phosphate composite precursor according to claim 1, **characterized in that** primary particles of the lithium iron phosphate composite precursor are a fragment structure formed from hollow spheres, a diameter of the fragments being 50 nm to 500 nm, and a thickness of the fragments being 20 nm to 300 nm.

6. The lithium iron phosphate composite precursor according to claim 5, **characterized in that** the primary particles agglomerate to form secondary particles, a diameter of the secondary particles being 200 nm to 50 µm, and a thickness of the secondary particles being 50 nm to 1000 nm.

7. The lithium iron phosphate composite precursor according to claim 1, **characterized in that** a specific surface area of the lithium iron phosphate composite precursor is 4.0-30.0 m²/g.

8. The lithium iron phosphate composite precursor according to claim 1, **characterized in that** a tap density of the lithium iron phosphate composite precursor is 0.3-1.5 g/cm³.

9. The lithium iron phosphate composite precursor according to claim 1, **characterized in that** a sulfur content of the lithium iron phosphate composite precursor is at most 200 ppm.

10. A preparation method of a lithium iron phosphate composite precursor, **characterized by** comprising the following steps:
(1) solution preparation: preparing a raw material aqueous solution having a Fe element content of 60 g/L to 210 g/L according to a molar ratio of Li:Fe:P=(0.95-1.05):( 0.95-1): 1;
(2) spray pyrolysis: subjecting the raw material aqueous solution to spray pyrolysis under an aerobic environment at 400°C to 800°C to obtain the lithium iron phosphate composite precursor.

11. The method according to claim 10, **characterized in that** step (1) comprises:
1.1) subjecting spent lithium iron phosphate batteries sequentially to discharging, dismantling, and separation to obtain a solid material to be treated containing lithium iron phosphate powder;
1.2) subjecting the obtained solid material to be treated to a leaching treatment using an acid solution to obtain a first treatment liquid containing Li, Fe, and P;
1.3) removing copper ions from the first treatment liquid and reducing ferric ions to ferrous ions to obtain a third treatment liquid;
1.4) in the presence of a reducing agent for ferric ions, adding a pH adjusting agent to the third treatment liquid to adjust a pH value to 2.8-4.0, then separating and removing a formed precipitate to obtain a fourth treatment liquid;
1.5) adjusting a pH value of the fourth treatment liquid to 0.2-0.8, using at least one of a lithium source, an iron source, or a phosphorus source to adjust a molar ratio of Li, Fe, and P in the fourth treatment liquid to Li:Fe:P= (0.95-1.05): (0.95-1): 1, and adjusting the Fe element content to 60 g/L to 210 g/L, to obtain the raw material aqueous solution.

12. The method according to claim 11, **characterized in that** the acid used in the leaching treatment in step 1.2) is hydrochloric acid, preferably a concentration of the hydrochloric acid is 20 wt% to 37 wt%.

13. The method according to claim 11, **characterized in that** step 1.3) is carried out as follows:
1.3-1) treating the first treatment liquid with a copper removal agent, and undergoing solid-liquid separation to obtain a second treatment liquid; and
1.3-2) treating the second treatment liquid with a reducing agent to obtain the third treatment liquid.

14. The method according to claim 13, **characterized in that** the copper removal agent is iron powder, and the reducing agent is iron powder.

15. The method according to claim 11, wherein the pH adjusting agent in step 1.4) is selected from at least one of lithium carbonate, lithium hydroxide, lithium bicarbonate, lithium oxalate, iron hydroxide, iron powder, lithium phosphate, ferrous phosphate, and ferrous dihydrogen phosphate.

16. The method according to claim 11, wherein the lithium source in step 1.5) is selected from at least one of lithium carbonate, lithium hydroxide, lithium bicarbonate, lithium oxalate, lithium phosphate, lithium monohydrogen phosphate, and lithium dihydrogen phosphate; the iron source is selected from at least one of ferrous hydroxide, iron powder, iron oxide, triiron tetraoxide, iron hydroxide, iron carbonate, and iron phosphate; the phosphorus source is selected from at least one of phosphoric acid, lithium phosphate, and iron phosphate.
